# EUROPÄISCHE PATENTSCHRIFT

(11) **EP 2 132 551 B1**
(45) Veröffentlichungstag und Bekanntmachung des Hinweises auf die Patenterteilung: **05.09.2018**
(21) Anmeldenummer: 08734812.4
(22) Anmeldetag: 27.03.2008
(51) Int. Cl.: G01N 21/17, G01N 21/37

(54) **PHOTOAKUSTISCHER DETEKTOR MIT ZWEI STRAHLENGÄNGEN FÜR DAS ANREGUNGSLICHT**
PHOTOACOUSTIC DETECTOR WITH TWO BEAM PATHS FOR EXCITATION LIGHT
DÉTECTEUR PHOTOACOUSTIQUE COMPORTANT DEUX TRAJECTOIRES DE FAISCEAU POUR LA LUMIÈRE D'EXCITATION

(30) Priorität: 27.03.2007 DE 102007014520
(43) Veröffentlichungstag der Anmeldung: 16.12.2009
(73) Patentinhaber: Fraunhofer-Gesellschaft zur Förderung der angewandten Forschung e.V., 80686 München (DE)
(72) Erfinder: MIKLOS, Andras, 70499 Stuttgart (DE); ANGSTER, Judit, 70499 Stuttgart (DE)
(74) Vertreter: Dörfler, Michael
(86) Internationale Anmeldenummer: PCT/EP2008/002430
(87) Internationale Veröffentlichungsnummer: WO 2008/116654

(56) Entgegenhaltungen:
- EP-A- 0 199 365
- EP-A- 0 855 592
- DE-A1- 2 405 317
- DE-A1- 2 849 379
- DE-A1-102005 025 675
- US-A- 3 995 960
- US-A- 5 933 245
- US-A1- 2006 254 340

## Beschreibung

### Technisches Gebiet

Die Anmeldung betrifft einen photoakustischen Detektor, der eine hohe Selektivität für Messungen von Gasen aufweist.

### Stand der Technik

Zur Messung und Überwachung der Konzentration von gasförmigen, luftverunreinigenden Stoffen in der Luft oder Verunreinigungen in Prozessgasen können verschiedene Arten von Detektoren/Sensoren und Analysatoren verwendet werden. Eine wichtige Familie der Gassensoren verwendet die selektive Absorption von Licht durch die Gasmoleküle.

Da das Absorptionsspektrum eine sehr charakteristische Eigenschaft eines Moleküls ist, können Absorptionsspektren oder gut selektierte Absorptionslinien zur Unterscheidung von verschiedenen Schadstoffen oder Verunreinigungen, die normalerweise in einem Gas vorhanden sind, verwendet werden.

Die Absorption von Licht in einem Gas kann auf verschiedene Weise gemessen werden. Ein Verfahren nutzt den so genannten photoakustischen Effekt, die Erzeugung von Schall durch Lichtabsorption. Man weiß, dass ein photoakustisches Signal nur erzeugt werden kann, wenn die absorbierte Lichtenergie nicht konstant ist, sondern sich von Zeit zu Zeit verändert. Deshalb kann nur moduliertes oder gepulstes Licht ein photoakustisches Signal erzeugen.

In der Photoakustik wird die Intensität eines Lichtstrahls, üblicherweise eines Laserstrahls, periodisch entweder durch ein rotierendes Chopper-Blatt oder die elektronische Treibereinheit einer Laser- oder Lichtquelle moduliert. Eine andere Möglichkeit ist die Modulation der Absorption, indem zum Beispiel die Wellenlänge eines Laserstrahls periodisch durch eine scharfe Absorptionslinie des Moleküls abgestimmt wird, das nachgewiesen werden soll (Wellenlängen-Modulation). In diesem Fall bleibt die die Lichtleistung der Lichtquelle, beispielsweise des Lasers konstant, aber der für die photoakustische Messung relevante absorbierte Teil verändert sich periodisch. Eine dritte Möglichkeit ist die Anwendung einer periodischen Impulsfolge eines gepulsten Lasers.

Photoakustische Gassensoren verwenden fast ausschließlich Laser als Lichtquellen. Früher wurden linienabstimmbare Gas-Laser wie zum Beispiel CO₂-Laser oder CO-Laser verwendet, heutzutage werden hauptsächlich Diodenlaser, Quantenkaskadenlaser oder abstimmbare nichtlineare Laserquellen benutzt. Diese Geräte sind allerdings teuer. Wenn auch der photoakustische Detektor an sich einfach und billig ist, so sind diese Geräte doch aufgrund des Preises der Laserquelle, der zwischen 80 % und 90 % der Gesamtkosten ausmacht, nur für Anwendungen geeignet, bei denen ihre herausragende Leistungsfähigkeit auch wirklich benötigt wird.

Billigere photoakustische Gasanalysatoren oder Gasüberwachungsgeräte verwenden eine breitbandige Infrarotquelle (Glühlampe, Infrarot-Emitter usw.). Da das Licht aus diesen Quellen von fast allen Molekülen absorbiert wird, ist es sehr schwierig, die Spezies, die in der zu überwachenden Luft oder in einem zu überwachenden Gas vorhanden sind, voneinander zu unterscheiden. Um die Selektivität dieser Geräte zu verbessern, müssen zusätzlich weitere spektral-selektive Elemente verwendet werden. Zwei Beispiele für photoakustische Instrumente, die breitbandige Lichtquellen und nicht dispersive optische Absorption benutzen, werden in den beiden folgenden Abschnitten detaillierter behandelt.

Eine breitbandige Lichtquelle wird bei photoakustischen Gasanalysatoren von INNOVA-AirTech Instruments verwendet. In diesen handelsüblichen Instrumenten wird eine erwärmte Glühlampe als Lichtquelle verwendet. Die Glühlampe wird im ersten Fokus eines elliptischen, goldbeschichteten Spiegels lokalisiert. Eine kleine photoakustische Zelle wird so positioniert, dass das Infrarotlicht mit Hilfe des elliptischen Spiegels durch ein Infrarotlicht durchlässiges Fenster in die Mitte der photoakustischen Zelle fokussiert wird. Das Licht wird moduliert durch ein rotierendes Chopper-Rad, und sechs verschiedene Wellenlängenbereiche können von Interferenzfiltern selektiert werden, die auf einem Karussellrad installiert sind. Dieses Instrument hat eine Empfindlichkeit im PPMV- Bereich, seine Selektivität ist allerdings begrenzt, weil verschiedene andere Komponenten in dem vom Interferenzfilter selektierten Wellenlängenbereich möglicherweise absorbieren.

Eine andere Art von Gasüberwachungsgerät (z. B. URAS von ABB) verwendet ein photoakustisches Prinzip zum Nachweis der optischen Absorption. In diesem Fall wird das Licht eines breitbandigen Infrarot-Emitters in zwei gleiche Teile geteilt und von einem Chopper moduliert. Dann passieren die beiden Strahlen zwei identische Gaszellen und gelangen in zwei Kammern eines Differentialdetektors. Die beiden Kammern sind getrennt, aber beide sind mit dem nachzuweisenden Gas gefüllt. Da das breitbandige Licht, das in die Kammern gelangt, immer die Wellenlängen umfasst, die von den Zielmolekülen absorbiert werden können, werden immer in beiden Kammern des Differentialdetektors photoakustische Signale erzeugt. Wird auf dem Weg zum Detektor in den Gaszellen kein Licht absorbiert, dann gelangt die gleiche Lichtenergie in beide Kammern, deshalb sind die photoakustischen Signale in beiden Kammern gleich und deshalb erscheint kein Differenzsignal. Bei Normalbetrieb wird jedoch die erste Gas-Zelle (Referenz) mit einem nicht absorbierenden Gas oder Gasgemisch gefüllt, während die zweite Gas-Zelle (Probe) mit einem zu überwachenden Gas, zum Beispiel Luft, gefüllt wird. Ein Teil des Lichts wird in der Probezelle absorbiert, deshalb gelangt weniger Lichtenergie in die zweite Kammer des Differentialdetektors als in die erste Kammer. Aus diesem Grund werden ungleiche photoakustische Signale beobachtet. Das DifferenzSignal ist größer, wenn mehr Licht in der Probezelle absorbiert wird. Dieses Instrument kann als Überwachungsgerät für das Molekül, mit dem der Differentialdetektor gefüllt ist, benutzt werden. Seine Empfindlichkeit ist aber begrenzt, weil im Falle einer schwachen Absorption in der Probezelle das Differenzsignal im Detektor gering ist. Die Nachweisgrenze wird somit vom Offset der Infrarot-Intensität und deren Schwankungen auf den beiden Lichtwegen bestimmt.
Aus der WO 2005/093390 A1 ist eine Vorrichtung bekannt, bei der Strahlung einer gepulsten Lichtquelle abwechselnd durch eine Messzelle A und eine Referenzzelle B in eine photoakustische Messzelle C geleitet wird. Die Absorption in der Zelle B ist weitgehend bekannt, da sich dort ein bekanntes Gas mit einer bekannten Konzentration befindet. Messzelle A und Referenzzelle B haben einen identischen Aufbau und unterscheiden sich nur hinsichtlich des enthaltenen Gases. Die Differenz des photoakustischen Signals, welches nach Durchgang der Strahlung durch Zelle A und Zelle B in der Zelle C generiert wird, ist ein Maß für die Absorption in der Zelle A. Damit kann auf Art und Konzentration eines Analyten in der Zelle A geschlossen werden.

Aus der GB 2 358 245 ist ein ähnlicher Aufbau bekannt. Auch hier ist vorgesehen Strahlung durch eine Messzelle und eine Referenzzelle zu leiten und die Menge der durchgelassenen Strahlung in einer weiteren Zelle photoakustisch zu bestimmen. Damit kann die Differenz der durch Messzelle und Referenzzelle geleiteten Strahlung und somit die Konzentzration eines Analyten in der Referenzzelle bestimmt werden.

Aus der DE 24 05 317 A1 ist ein nichtdespersiver Zweistrahl-Ultrarotabsorptionsgasanalysator bekannt. Dabei ist in den Strahlenwegen zwischen einer Strahlungsquelle und einem selektiven Strahlungsempfänger außer einer mit dem Meßgas gefüllten Küvette jeweils eine weitere gasgefüllte Küvette angeordnet. Eine dieser Küvetten enthält im wesentlichen die zu messende Gaskomponente und hat Unterdruck. Aus der Differenz der Absorption in den beiden Strahlenwegen kann, unter Berücksichtigung verschiedener Umstände, auf die Absorption des zu messenden Gases geschlossen werden.

Aus der US 5,933,245 A und aus der US 2006/0 254 340 A1 sind photoakustische Messeinrichtungen bekannt, bei denen eine hohe Konstanz des Anregungslichts erreicht werden kann, so dass kein photoakustisches Signal durch Intensitätsschwankungen des Anregungslichts erzeugt wird.

Aus der US 3,995,960 A ist eine photoakustische Messeinrichtung bekannt. Dafür ist eine längliche Messzelle vorhanden, bei der das Anregungslicht abwechselnd in Längsrichtung und in Querrichtung durch die Messzelle geführt wird. Dabei werden für die beiden Pfade, also den in Längsrichtung und den in Querrichtung, weitgehend identische Fenster eingesetzt. Die Absorbtion in den Fenstern ist in beiden Pfadführungen gleich, so dass Schwankungen der Absorption zwischen der Führung in Längsrichtung und in Querrichtung auf die Absorption beim Weg durch die gasgefüllte Messzelle, also die Absorption im Gas, zurückzuführen sind. Auf dem Pfad in Längsrichtung ist die Absorption wegen der höheren Weglänge freilich höher, abhängig vom zu messenden Gas.

### Darstellung der Erfindung

Der vorliegenden Erfindung liegt daher die Aufgabe zugrunde, die Nachteile des Standes der Technik zu überwinden und einen photoakustischen Detektor bereitzustellen, der eine hohe Selektivität auch bei Verwendung von breitbandigen und damit preisgünstig erhältlichen Lichtquellen ermöglicht. Ebenso Aufgabe der Erfindung ist es, ein entsprechendes Messverfahren bereit zu stellen. Die Aufgaben werden durch die Merkmale der unabhängigen Ansprüche gelöst. Vorteilhafte Weiterbildungen finden sich in den abhängigen Ansprüchen. Es wurde erkannt, dass ein photoakustischer Detektor bereit zu stellen ist, der folgenden Aufbau aufweist:
Es sind zwei Lichtquellen oder eine Lichtquelle mit Strahlteiler zur Bereitstellung von Licht gleicher Intensität und gleicher spektraler Verteilung vorhanden. Ferner sind ein der ersten Lichtquelle zugeordneter erster Strahlengang und ein der zweiten Lichtquelle zugeordneter zweiter Strahlengang vorzusehen. Dabei ist zu gewährleisten, dass im ersten und im zweiten Strahlengang in mindestens einem ausgewählten Wellenlängenbereich eine unterschiedliche Absorption des Lichts erfolgen kann. Schließlich sind Mittel vorzusehen, um abwechselnd Licht aus dem ersten und aus dem zweiten Strahlengang in eine photoakustische Messzelle zu führen.

Auf diese Weise wird erreicht, dass in den ausgewählten Wellenlängenbereichen, in denen im ersten Strahlengang und im zweiten Strahlengang eine unterschiedliche Absorption des Lichts besteht, die Intensität des in die Messzelle gelangenden Lichts sich zeitlich ändert. Wenn das Licht in den ausgewählten Wellenlängenbereichen in der Messzelle absorbiert wird, entsteht in der Messzelle ein photoakustisches Signal. Das photoakustische Signal entsteht nur bei zeitlicher Änderung der Intensität des einfallenden Lichts. Nur dann erfolgen durch die Absorption Erwärmungen, welche zu Ausdehnungen und daraus hervorgerufenen Schallwellen führen. Bleibt die Intensität konstant, so tritt zwar eine stete Wärmezufuhr auf. Es bildet sich aber relativ rasch ein stationärer Zustand, in dem die durch die Absorption des Lichts zugeführte Wärme gleichmäßig abgeführt wird und eine konstante Temperatur in der photoakustischen Messzelle sich ausbildet. In diesem Fall gibt es keine Erwärmungen und Ausdehnungen mehr, welche zu Druckwellen führen. Eine Absorption des Lichts in den Wellenlängenbereichen, bei denen im ersten und im zweiten Strahlengang dieselbe Absorption besteht, führt nach den vorgenannten Überlegungen auch nicht zu einem photoakustischen Signal. Wichtig ist dabei freilich, dass die erste und die zweite Lichtquelle tatsächlich Licht mit hinreichend gleicher Intensität und gleicher spektraler Verteilung der Intensität bereitstellen. Geringfügige Unterschiede der Intensität und/oder der spektralen Verteilung können hingenommen werden, sofern diese nicht zu einem nicht mehr hinnehmbaren photoakustischen Hintergrundsignal auch aus den Wellenlängebreichen, in denen in beiden Strahlengängen die gleiche Absorption besteht, führen. Ferner ist bedeutsam, dass die Mittel, welche abwechselnd Licht aus dem ersten und aus dem zweiten Strahlengang in die photoakustische Messzelle führen sollen, so beschaffen sind, dass der Wechsel vom ersten Strahlengang zum zweiten Strahlengang jeweils so gleichmäßig erfolgt, dass bei gleicher Intensität und spektraler Verteilung im ersten und im zweiten Strahlengang eine konstante, zeitlich sich nicht ändernde Lichtintensität in die photoakustische Messzelle geführt wird. Der Wechsel vom ersten zum zweiten Strahlengang erfolgt dabei kontinuierlich. In dem Maße, in dem die Intensität im ersten Strahlengang abnimmt, nimmt gleichzeitig die Intensität im zweiten Strahlengang zu. Wiederum gilt dass leichte Schwankungen der Lichtintensität hingenommen werden können, wenn diese nicht zu einem nicht mehr hinnehmbaren photoakustischen Signal führen. Dieser Aufbau hat gegenüber dem bekannten Aufbau, das Licht aus zwei Strahlengängen in zwei Messzellen zu leiten und das Differenzsignal zu messen, den Vorteil, dass nur Absorption in dem Wellenlängenbereich, in dem in beiden Strahlengängen die Absorption unterschiedlich ist, zum Signal beiträgt. Deswegen ergibt sich tendenziell eine höhere Messgenauigkeit als bei einem Aufbau, bei dem weite Wellenlängenbereiche zum Signal beitragen und dann die Differenz genommen wird, wie dies bei Gerät Uras von ABB vorgesehen ist. Die Intensität der beiden Strahlungsquellen ist dabei derart konstant, dass deren zeitliche Änderung kein die Messung verfälschendes photoakustisches Signal hervorrufen kann. Eine geringe Änderung der Intensität einer Lichtquelle könnte hingenommen werden, wenn dadurch nur ein die Messung nicht verfälschendes photoakustisches Signal erfolgt.

Eine Möglichkeit, in der ersten und in der zweiten Lichtquelle Licht gleicher Intensität und gleicher spektraler Verteilung bereitzustellen, ist es, die erste und die zweite Lichtquelle durch eine gemeinsame Lichtquelle, deren Strahlung in einem Strahlteiler aufgeteilt werden kann auszubilden. Es sind Strahlteiler erhältlich, mit denen ein Strahl mit befriedigender Genauigkeit in zwei gleiche Teilstrahlen aufgeteilt werden kann.

Eine weitere, durchaus preisgünstige Möglichkeit zur Bereitstellung von Licht gleicher Intensität und gleicher spektraler Verteilung in der ersten und zweiten Lichtquelle ist es, identische Strahler, insbesondere identische Infrarotemitter bereitzustellen.

Wie dargelegt sollte bei gleicher Absorption in beiden Strahlengängen sich kein photoakustisches Signal ergeben. Da eine gleiche Absorption in beiden Strahlengängen leicht verwirklichbar ist, kann eine Testmessung mit gleicher Absorption durchgeführt werden, bei der kein photoakustisches Signal erkennbar sein sollte. Ist dabei dennoch ein photoakustisches Signal erkennbar, deutet dies darauf hin, dass die Intensität und spektrale Verteilung der beiden Lichtquellen unterschiedlich ist oder der Übergang von einem Strahlengang auf den nächsten nicht gleichmäßig genug erfolgt. Entsprechend kann Abhilfe geschaffen werden.

Bringt man in den ersten Strahlengang eine Referenzzelle und in den zweiten Strahlengang eine Absorptionszelle ein, welche in ausgewählten Wellenlängenbereichen absorbiert, so kann auf einfache und reproduzierbare Weise in den verschiedenen Strahlengängen eine unterschiedliche Absorption erfolgen. Dabei ist es günstig, wenn die Absorptionszelle leicht ausbaubar ist, um verschiedene Absorptionszellen je nach Bedarf einsetzen zu können. Die Auswahl, in welchen Strahlengang die Absorptionszelle und in welchen Strahlengang die Referenzzelle eingebracht wird, ist willkürlich. Es kommt darauf an, dass in einem Strahlengang die Absorptionszelle und im anderen die Referenzzelle liegt.

Um ein möglichst hohes akustisches Signal und damit eine möglichst empfindliche Messung zu erreichen, ist es sinnvoll, wenn in der Absorptionszelle derselbe Stoff enthalten ist, dessen Konzentration in der photoakustischen Messzelle zu messen ist.

Damit ist die Absorption in genau in den Wellenlängenbereichen unterschiedlich, welche in der photoakustischen Messzelle zu einem photoakustischen Signal, welches auf die Anwesenheit der zu untersuchenden Substanz zurückzuführen ist, führt.

Bei der zu untersuchenden Substanz handelt es sich zumeist um Gasbestandteile, deren Konzentration in einem Gas zu messen ist. Dies deshalb, da hier photoakustische Messungen besonders gut durchgeführt werden können, da in Gasen die Ausdehnung bei Erwärmung und damit das photoakustische Signal besonders hoch ist. Grundsätzlich kann vorliegend die photoakustische Messzelle auch zur Detektion in Gasen oder Flüssigkeit ausgebildet werden.

Eine weitere Verbesserung ergibt sich, wenn die Referenzzelle in den nicht ausgewählten Wellenlängenbereichen dieselbe Absorption aufweist wie die Absorptionszelle. In der Praxis dürfte es sich als sehr schwierig darstellen, eine Absorptionszelle zu finden, welche nur in den Wellenlängenbereichen, in denen eine unterschiedliche Absorption erwünscht ist, absorbiert. Vielmehr weist jede Absorptionszelle Fenster auf; zudem sind die Stoffe, deren Absorptionsvermögen gewünscht ist, in der Regel in einem Trägergas. Dies führt zu einer Absorption auch in den Wellenlängenbereichen, in denen in beiden Strahlengängen dieselbe Absorption gewünscht ist. Dies kann durch eine Referenzzelle ausgeglichen werden, welche in den nicht ausgewählten Wellenlängenbereichen dieselbe Absorption wie die Absorptionszelle aufweist. Dies kann praktisch dadurch realisiert werden, dass eine Absorptionszelle ausgewählt wird, welche ein Trägergas mit dem absorbierenden Stoff enthält, und eine Absorptionszelle, welche das Trägergas ohne den absorbierenden Stoff enthält.

Um den photoakustischen Detektor in möglichst vielen unterschiedlichen Wellenlängenbereichen und damit für möglichst viele unterschiedliche Substanzen einsetzen zu können, ist es sinnvoll, dass verschiedene Absorptionszellen und/oder Referenzzellen vorhanden sind, welche in den Strahlengang eingebracht werden können. Damit können unterschiedliche Substanzen, die in verschiedenen Wellenlängenbereichen gut absorbieren, gemessen werden. Darüber hinaus ist es möglich, das photoakustische Signal bei unterschiedlichen Wellenlängenbereichen, also bei verschiedenen Wellenlängenbereichen, in denen im ersten und im zweiten Strahlengang eine unterschiedliche Absorption besteht, zu messen. Dies kann zur Erhöhung der Selektivität, also der Bestimmung welche Substanz oder welches Substanzgemisch in den Messzelle vorhanden ist, sehr vorteilhaft sein.

Eine einfache Möglichkeit, die vorgenannte Verbesserung umzusetzen, ist es, die verschiedenen Absorptionszellen und/oder Referenzzellen nach Art eines Karussells auf einer Kreisbahn anzuordnen und eine gewünschte Absorptionszelle und/oder Referenzzelle in den ersten und/oder zweiten Strahlengang drehen zu können. Damit können durch einen einfachen Aufbau viele Wellenlängenbereiche ausgewählt werden, in denen im ersten und im zweiten Strahlengang eine unterschiedliche Absorption besteht.

Ein Mittel um abwechselnd Licht aus den verschiedenen Strahlengängen in die photoakustische Messzelle zu führen, ist ein drehbarer, insbesondere polygonaler, Spiegel. Dieser kann so aufgebaut sein und so gedreht werden, dass in sehr kurzer Zeit von einem Strahlengang zu einem zweiten Strahlengang umgeschaltet werden kann. Derartige rotierende Spiegel werden in Laserdruckern eingesetzt und sind damit als zuverlässige Massenprodukte preiswert erhältlich. Ein anderes Mittel ist ein oszillierender Spiegel mit einer bestimmten Oszillationsfrequenz. Solche Spiegel werden in Laserscanner eingebaut und sind somit auch als Massenprodukt preiswert erhältlich.

Trotz der vorgenannten Maßnahmen kann das Problem verbleiben, dass in der photoakustischen Messzelie auch ein Signal erzeugt wird, welches nicht auf die zu untersuchende Substanz zurückzuführen ist, sondern auf eine Absorption etwa in den Fenstern der photoakustischen Messzelle. Damit dies nicht zu einer Verfälschung der Messung führt, ist es möglich, eine weitere photoakustische Messzelle als Vergleichsmesszelle vorzusehen, in die ebenso wie in die photoakustische Messzelle Licht geleitet werden kann und die ebenso wie die photoakustische Messzelle aufgebaut ist. Dabei versteht es sich, dass sicher zu stellen ist, dass tatsächlich Licht gleicher spektraler Intensität und gleicher spektraler Verteilung in die Messzelle und die Vergleichsmesszelle gelangt. Die Differenz der aus Messzelle und der Vergleichsmesszelle erhaltenen Signale ist eindeutig auf die zu untersuchende Substanz zurückzuführen, sofern sich die Messzelle und die Referenzmesszelle nur in der Anwesenheit der Substanz unterscheiden. Falls die zu untersuchende Substanz in einem Trägergas vorhanden ist, ist darauf zu achten, dass in der Vergleichsmesszelle dasselbe Trägergas ohne die zu untersuchende Substanz vorhanden ist.

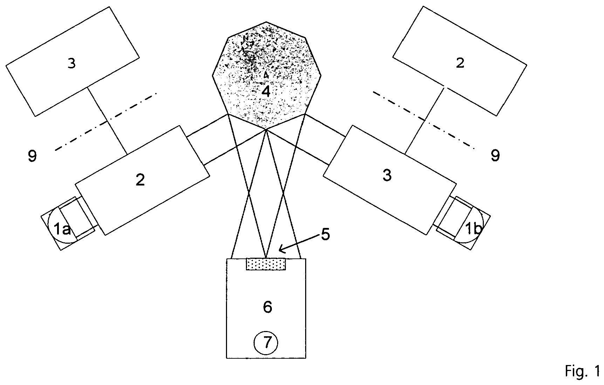

Ohne Einschränkung der Allgemeinheit wird die Erfindung anhand eines Ausführungsbeispiels nachfolgend näher beschrieben. Dabei zeigt Figur 1 einen möglichen Aufbau des photoakustischen Detektors.

Zwei identische Miniatur-Infrafrot-Emitter 1a, 1b, die mit Parabolspiegeln ausgestattet sind, senden parallele Infrarotstrahlen aus. Der Infrarotstrahl aus dem Emitter 1a geht durch die mit trockener synthetischer Luft gefüllte Referenzzelle 2, während der Strahl aus dem anderen Infrarot-Emitter 1b durch die Absorptionszelle 3 geht, die mit einer Mischung aus trockener synthetischer Luft und einem Zielgas gefüllt ist, dessen Moleküle einen Teil des Infrarotlichts absorbieren. Die Konzentration des Zielgases in der Absorptionszelle 3 ist so selektiert, dass mindestens 95% des Infrarotlichts an der stärksten Absorptionslinie des Zielgases absorbiert werden.
Die Infrarotstrahlen werden von einem polygonalen Spiegel 4 alternativ zu dem Infrarot durchlässigen Fenster 5 reflektiert und gelangen in die photoakustische Zelle 6, die mit einem Messmikrophon 7 ausgestattet ist. Die Intensität des Infrarotlichts in der photoakustischen Zelle ist konstant bei Wellenlängen, bei denen in der Absorptionszelle 3 keine Absorption stattfindet, aber sie wird moduliert bei Wellenlängen, bei denen das Zielgas das Licht in der Absorptionszelle 3 absorbiert. Da ein photoakustisches Signal nur durch den modulierten Teil des Lichts erzeugt werden kann, können nur solche Komponenten des Gases in der photoakustischen Zellle 6 photoakustische Signale produzieren, die bei den Absorptionswellenlängen des Zielgases in der Referenzzelle 2 auch selbst absorbieren. Es muss also das in der Absorptionszelle 3 befindliche Zielgas auch in den Bereichen absorbieren, in dem das in der photoakustischen Zelle 6 nachzuweisende Gas absorbiert. Das photoakustische Signal ist natürlich am größten, wenn in der Absorptionszelle 3 und in der photoakustischen Zelle 6 dasselbe Gas vorhanden ist.
Verschiedene Gase können nachgewiesen werden, indem weitere Absorptionszellen 3 verwendet werden, die mit Gasmischungen gefüllt sind, die verschiedene Zielmoleküle enthalten. In dem in Figur 1 gezeigten System werden Referenzzellen 2 und Absorptionszellen 3, auf zwei drehbare Karussellräder 9 montiert. Auf jedem Karusselrad 8 können sechs Referenz- oder Absorptionszellen 2, 3, montiert werden, deshalb finden eine Referenzzelle 2 und fünf Absorptionszellen 3 auf jedem Karussellrad 8 Platz. Auf diese Weise können zehn verschiedene Gase mit diesem Instrument nachgewiesen werden. Die Zahl von 6 Referenz- oder Absorptionszellen auf jedem Karusselrad 8 wird deshalb gewählt, weil dies eine relativ hohe Zahl von Zellen bei vergleichsweise niedrigem Platzbedarf ermöglicht. Selbstverständlich wäre auch eine höhere oder niedrigere Zahl möglich.

Die beiden Referenzzellen 2 werden benötigt, um das photoakustische Störsignal zu minimieren, das wegen der geringen Veränderungen der Lichtenergie in der photoakustischen Zelle 6 auftritt. Die periodische Veränderung der Lichtenergie aufgrund des Ungleichgewichts der beiden Kanäle kann ein Fremdgeräuschsignal erzeugen, das auf die Lichtabsorption im infrarot durchlässigen Fenster 5 zurückzuführen ist. Wenn beide Karusselräder so gedreht sind, dass in beiden Strahlengängen die Referenzzellen 2 positioniert sind und beide Referenzzellen 2 wie auch die photoakustische Zelle 6 mit der nicht absorbierenden Referenzmischung gefüllt sind, kann das Fremdgeräuschsignal minimiert oder eliminiert werden, indem die Ausrichtung der Infrarotstrahlen und/oder die Versorgungsspannung der Infrarot-Emitter 1a, b verändert werden.

Der photoakustische Gassensor kann kalibriert werden, indem die photoakustische Zelle 6 mit bekannten Gasmischungen verschiedener Zielgase gefüllt wird. Die Kreuz-Empfindlichkeiten des Instruments können bestimmt werden, indem das photoakustische Signal in der photoakustischen Zelle 6 gemessen wird, die mit einer Mischung aus dem n-ten Zielgas gefüllt ist, wenn die anderen neun mit dem Zielgas gefüllten Absorptionszellen 3 zur Modulation verwendet werden.

### Bezugszeichenliste

- 1 a, b:: Miniatur-Infrarot-Emitter
- 2:: Referenzzelle
- 3:: Absorptionszelle
- 4:: Polygonaler Spiegel
- 5:: Infrarot durchlässiges Fenster
- 6:: photoakustische Zelle
- 7:: Messmikrophon
- 8:: Karusselrad

## Patentansprüche

1. Photoakustischer Detektor, der folgende Merkmale aufweist:
eine erste und eine zweite Lichtquelle (1 a, b), zur Bereitstellung von Licht gleicher Intensität bei gleicher spektraler Verteilung;
ein der ersten Lichtquelle (1a, b) zugeordneter erster Strahlengang und mindestens ein der zweiten Lichtquelle (1a, b) zugeordneter zweiter Strahlengang, wobei im ersten und zweiten Strahlengang in mindestens einem ausgewählten Wellenlängenbereich eine unterschiedliche Absorption des Lichts erfolgen kann;
Mittel (4), um abwechselnd Licht aus dem ersten und aus dem zweiten Strahlengang in eine photoakustische Messzelle (6) zu führen;
wobei die Intensität der Lichtquellen derart konstant ist, dass deren Änderung kein die Messung verfälschendes photoakustisches Signal hervorrufen kann **dadurch gekennzeichnet, dass** im ersten oder im zweiten Strahlengang eine Absorptionszelle (3) eingebracht ist, welche in ausgewählten Wellenlängenbereichen absorbiert.

2. Photoakustischer Detektor nach Anspruch 1, **dadurch gekennzeichnet, dass** die erste und die zweite Lichtquelle(1a, b) durch eine gemeinsame Lichtquelle, deren Strahlung in einem Strahlteiler aufgeteilt werden kann, gebildet werden.

3. Photoakustischer Detektor nach Anspruch 1, **dadurch gekennzeichnet, dass** die erste und die zweite Lichtquelle identische Strahler, insbesondere identische Infrarot-Emitter sind (1 a, b).

4. Photoakustischer Detektor nach einem der vorhergehenden Ansprüche, **dadurch gekennzeichnet, dass** in der Absorptionszelle (3) dieselbe Substanz enthalten ist, deren Konzentration in der photoakustischen Messzelle (6) zu messen ist.

5. Photoakustischer Detektor nach einem der vorhergehenden Ansprüche , **dadurch gekennzeichnet, dass** in dem Strahlengang, in dem keine Absorptionszelle (3) eingebracht ist, eine Referenzzelle (2) eingebracht ist, welche in den nicht ausgewählten Wellenlängenbereichen dieselbe Absorption aufweist wie die Absorptionszelle (3).

6. Photoakustischer Detektor nach einem der vorhergehenden Ansprüche, **dadurch gekennzeichnet, dass** verschiedene Absorptionszellen (3) und/oder Referenzzellen (2) vorhanden sind, welche in den Strahlengang eingebracht werden können.

7. Photoakustischer Detektor nach Anspruch 6, **dadurch gekennzeichnet, dass** die verschiedenen Absorptionszellen (3, 8) und/oder die verschiedenen Referenzzellen (2) nach Art eines Karussells (9) auf einer Kreisbahn angeordnet sind und eine gewünschte Absorptionszelle (3, 8) und/oder Referenzzelle (2) in den ersten und/oder zweiten Strahlengang gedreht werden kann

8. Photoakustischer Detektor nach einem der vorhergehenden Ansprüche, **dadurch gekennzeichnet, dass** als Mittel um abwechselnd Licht aus den Strahlengängen in die photoakustische Messzelle (6) zu leiten ein oszillierender oder ein drehbarer, insbesondere ein polygonaler, Spiegel (4) vorhanden ist.

9. Photoakustischer Detektor nach einem der vorhergehenden Ansprüche, **dadurch gekennzeichnet, dass** eine photoakustische Vergleichsmesszelle vorhanden ist, welche wie die photoakustische Messzelle (6) aufgebaut ist und in die Licht wie in die photoakustische Messzelle (6) geleitet werden kann.

10. Verfahren bei dem photoakustisch die Konzentration eines Analyten in einer photoakustischen Messzelle (6) bestimmt wird, wobei abwechselnd Licht aus einer ersten Lichtquelle (1a, b) durch einen ersten Strahlengang und Licht aus einer zweiten Lichtquelle (1a, b) durch einen zweiten Strahlengang in die photoakustische Messzelle (6) geführt wird, wobei im ersten Strahlengang und in dem zweiten Strahlengang das Licht, welches in der ersten und der zweiten Lichtquelle in gleicher Intensität bei gleicher spektraler Verteilung bereitgestellt wird, in ausgewählten Wellenlängebereichen unterschiedlich stark absorbiert wird, Wobei die Intensität der Lichtquellen derart konstant ist, dass deren zeitliche Änderung kein die Messung verfälschendes photoakustisches Signal hervorrufen kann, **dadurch gekennzeichnet, dass** im ersten oder im zweiten Strahlengang eine Absorptionszelle (3) eingebracht ist, welche in ausgewählten Wellenlängenbereichen absorbiert.

## Claims

1. Photoacoustic detector having the following characteristics:
a first and a second light source (1a, b) for providing light of the same intensity while retaining the same spectral distribution;
a first beam path allocated to the first light source (1a, b) and at least one second beam path allocated to the second light source (1a, b), wherein a different absorption of the light can occur in the first and second beam paths in at least one selected wavelength range;
means (4) for alternately guiding light from the first and from the second beam path into a photoacoustic measuring cell (6);
wherein the intensity of the light sources is constant such that the change thereof cannot generate a photoacoustic signal that distorts the measurement, **characterized in that** an absorption cell (3) is positioned in the first or in the second beam path, which absorption cell absorbs in selected wavelength ranges

2. Photoacoustic detector according to claim 1 **characterized in that** the first and the second light source (1a, b) are formed by a common light source, the radiation of which can be split in a beam splitter.

3. Photoacoustic detector according to claim 1, **characterized in that** the first and the second light source are identical light emitters, in particular identical infrared emitters (1a, b).

4. Photoacoustic detector according to one of the preceding claims, **characterized in that** the absorption cell (3) contains the same substance, the concentration of which is to be measured in the photoacoustic measuring cell (6)

5. Photoacoustic detector according to one of the preceding claims, **characterized in that** in the beam path in which no absorption cell (3) is positioned, a reference cell (2) is positioned, which has the same absorption in the unselected wavelength ranges as the absorption cell (3).

6. Photoacoustic detector according to one of the preceding claims, **characterized in that** different absorption cells (3) and/or reference cells (2) are present, which can be positioned in the beam path

7. Photoacoustic detector according to claim 6, **characterized in that** the different absorption cells (3, 8) and/or the different reference cells (2) are arranged in the manner of a carousel (9) on a circular path and a desired absorption cell (3, 8) and/or reference cell (2) can be rotated into the first and/or second beam path

8. Photoacoustic detector according to one of the preceding claims, **characterized in that** an oscillating or a rotatable, in particular a polygonal, mirror (4) is present as means for alternately guiding light from the beam paths into the photoacoustic measuring cell (6).

9. Photoacoustic detector according to one of the preceding claims, **characterized in that** a photoacoustic comparison measuring cell is present, which is structured like the photoacoustic measuring cell (6) and into which light can be guided as into the photoacoustic measuring cell (6).

10. Method in which the concentration of an analyte can be determined photoacoustically in a photoacoustic measuring cell (6), wherein light is alternately supplied from first light source (1a, b) through a first beam path and light from a second light source (1a, b) through a second beam path into the photoacoustic measuring cell (6), wherein, in the first beam path and in the second beam path, the light that is provided of the same intensity while retaining the same spectral distribution in the first and the second light source, is absorbed at different strengths in selected wavelength ranges, wherein the intensity of the light sources is constant in such a way that their temporal change cannot generate a photoacoustic signal that distorts the measurement, **characterized in that** an absorption cell (3) is positioned in the first or in the second beam path, which absorption cell absorbs in selected wavelength ranges.

## Revendications

1. Détecteur photoacoustique, qui possède les caractéristiques suivantes :
une première et une deuxième source de lumière (1a, b) destinées à fournir de la lumière de même intensité lors d'une distribution spectrale identique ;
un premier trajet de faisceau associé à la première source de lumière (1a, b) et au moins un deuxième trajet de faisceau associé à la deuxième source de lumière (1a, b), une absorption différente de la lumière pouvant avoir lieu dans le premier et dans le deuxième trajet de faisceau dans au moins une plage de longueurs d'onde sélectionnée ;
des moyens (4) pour guider en alternance la lumière issue du premier et issue du deuxième trajet de faisceau dans une cellule de mesure photoacoustique (6) ;
l'intensité des sources de lumière étant constante de telle sorte que sa modification ne peut pas donner lieu à un signal photoacoustique qui fausse la mesure **caractérisé en ce qu'**une cellule d'absorption (3) est incorporée dans le premier ou le deuxième trajet de faisceau, laquelle absorbe dans les plages de longueurs d'onde sélectionnées.

2. Détecteur photoacoustique selon la revendication 1, **caractérisé en ce que** la première et la deuxième source de lumière (1a, b) sont formées par une source de lumière commune dont le rayonnement peut être divisé par un séparateur de faisceaux.

3. Détecteur photoacoustique selon la revendication 1, **caractérisé en ce que** la première et la deuxième source de lumière sont des sources de rayonnement identiques, notamment des émetteurs d'infrarouges (1a,b) identiques.

4. Détecteur photoacoustique selon l'une des revendications précédentes, **caractérisé en ce que** la cellule d'absorption (3) contient la même substance que celle dont la concentration doit être mesurée dans la cellule de mesure photoacoustique (6).

5. Détecteur photoacoustique selon l'une des revendications précédentes, **caractérisé en ce qu'**une cellule de référence (2) est incorporée dans le trajet de faisceau dans lequel n'est incorporé aucune cellule d'absorption (3), laquelle possède la même absorption que la cellule d'absorption (3) dans les plages de longueurs d'onde non sélectionnées.

6. Détecteur photoacoustique selon l'une des revendications précédentes, **caractérisé en ce que** des cellules d'absorption (3) et/ou des cellules de référence (2) différentes sont présentes, lesquelles peuvent être incorporées dans le trajet de faisceau.

7. Détecteur photoacoustique selon la revendication 6, **caractérisé en ce que** les différentes cellules d'absorption (3, 8) et/ou les différentes cellules de référence (2) sont disposées à la manière d'un carrousel (9) sur une trajectoire circulaire et une cellule d'absorption (3, 8) et/ou cellule de référence (2) souhaitées peuvent être tournées dans le premier et/ou le deuxième trajet de faisceau.

8. Détecteur photoacoustique selon l'une des revendications précédentes, **caractérisé en ce qu'**un miroir (4) oscillant ou rotatif, notamment polygonal, est présent en tant que moyen pour guider en alternance la lumière issue des trajets de faisceau dans la cellule de mesure photoacoustique (6).

9. Détecteur photoacoustique selon l'une des revendications précédentes, **caractérisé en ce qu'**une cellule de mesure comparative photoacoustique est présente, laquelle est constituée comme la cellule de mesure photoacoustique (6) et dans laquelle la lumière peut être guidée comme dans la cellule de mesure photoacoustique (6).

10. Procédé de détermination photoacoustique de la concentration d'une substance à analyser dans une cellule de mesure photoacoustique (6), de la lumière issue d'une première source de lumière (1a, b) étant guidée dans la cellule de mesure photoacoustique (6) par un premier trajet de faisceau et, en alternance, de la lumière issue d'une deuxième source de lumière (1a, b) l'étant guidée dans la cellule de mesure photoacoustique par un deuxième trajet de faisceau, la lumière, qui est délivrée dans la même intensité lors de la même distribution spectrale dans la première et la deuxième source de lumière, étant absorbée avec une intensite différente dans des plages de longueurs d'onde sélectionnées dans le premier trajet de faisceau et dans le deuxième trajet de faisceau, l'intensité des sources de lumière étant constante de sorte que sa variation dans le temps ne donne pas lieu à un signal photoacoustique qui fausse la mesure, **caractérisé en ce qu'**une cellule d'absorption (3) est incorporée dans le premier ou le deuxième trajet de faisceau, laquelle absorbe dans les plages de longueurs d'onde sélectionnées.
